# DEMANDE DE BREVET EUROPEEN

(11) **EP 1 363 380 A1**
(43) Date de publication de la demande: **19.11.2003**
(21) Numéro de dépôt: 03291123.2
(22) Date de dépôt: 14.05.2003
(51) Int. Cl.: H02J 7/32

(54) **Générateur d'alimentation de batterie d'instrument portable tel qu'un téléphone portable**

(30) Priorité: 14.05.2002 FR 0205898
(71) Demandeur: Cibié, Pierre, F-92200 Neuilly sur Seine (FR)
(72) Inventeur: Cibié, Pierre, F-92200 Neuilly sur Seine (FR)
(74) Mandataire: Fosse, Danièle

(57) **Abrégé**

L'invention concerne un générateur d'alimentation de la batterie d'un instrument portable tel qu'un téléphone portable, un baladeur ou similaires.

L'invention consiste en ce qu'il est constitué d'un aimant permanent (1) sous forme de barreau monté libre en rotation autour d'un axe de pivotement (2) correspondant à son axe médian, à l'intérieur d'un circuit magnétique (4) qui est le noyau d'une bobine (5), l'aimant permanent (1) portant une masse (3) au voisinage de l'une de ses extrémités, cet ensemble étant monté dans l'instrument de telle sorte que, lors de mouvements auxquels est soumis ledit instrument portable, l'aimant (1) déséquilibré par la masse (3), pivote autour de son axe (2) et par rapport au circuit magnétique (4), ce qui induit, dans la bobine (5), un courant utilisé pour charger la batterie de l'instrument.

## Description

La présente invention concerne un générateur d'alimentation de la batterie d'un instrument portable tel qu'un téléphone portable.

Les téléphones portables présentent un inconvénient majeur en ce que leurs batteries doivent être régulièrement rechargées. Lors du chargement de la batterie le téléphone est le plus souvent inutilisable. Par ailleurs, il est fréquent d'oublier de charger son téléphone portable.

En outre, les utilisateurs de téléphones portables n'ont pas toujours sur eux le chargeur nécessaire à la charge de la batterie quand cela est nécessaire.

Ce problème existe également pour tous les instruments portables tels que baladeur à cassettes ou à compacts disques, récepteurs de radio portable, etc.

De manière à pallier cet inconvénient, la présente invention a pour but de proposer un générateur conçu pour s'intégrer dans un instrument portable du type téléphone portable, baladeur, etc. et qui permet d'alimenter régulièrement la batterie dudit instrument.

A cet effet, l'invention a pour objet un générateur d'alimentation de la batterie d'un instrument portable tel qu'un téléphone portable, un baladeur ou similaires, caractérisé en ce qu'il est constitué d'un aimant permanent sous forme de barreau monté libre en rotation autour d'un axe de pivotement correspondant à son axe médian, à l'intérieur d'un circuit magnétique qui est le noyau d'une bobine, l'aimant permanent portant une masse au voisinage de l'une de ses extrémités, cet ensemble étant monté dans l'instrument de telle sorte que, lors de mouvements auxquels est soumis ledit instrument portable, l'aimant déséquilibré par la masse, pivote autour de son axe et par rapport au circuit magnétique, ce qui induit, dans la bobine, un courant utilisé pour charger la batterie de l'instrument.

Ainsi de manière avantageuse, lorsque l'utilisateur de l'instrument muni d'un générateur selon l'invention se déplace, il permet la charge de sa batterie, le générateur utilisant les mouvements aléatoires réalisés au cours du déplacement.

Le circuit magnétique peut être constitué de deux demi-circuits reliés par le noyau d'une bobine. Les deux demi-circuits sont alternativement nord et sud, la variation de flux induisant un courant alternatif.

Un générateur selon l'invention peut également présenter une structure similaire à celle d'un alternateur dont le rotor est constitué par l'aimant. Le courant est fourni par le stator et est redressé ensuite par un pont de diodes.

De préférence, le générateur comporte en outre un redresseur, le courant induit dans la bobine, de nature alternative, étant ainsi avantageusement redressé pour fournir à la batterie un courant de nature continue.

Selon une forme de réalisation préférée, le générateur est inséré dans l'instrument de sorte que l'axe de pivotement de l'aimant permanent est parallèle à l'axe longitudinal de l'instrument.

L'invention a également pour objet un instrument portable tel qu'un téléphone, baladeur ou similaires, caractérisé en ce qu'il comporte un générateur tel que décrit précédemment.

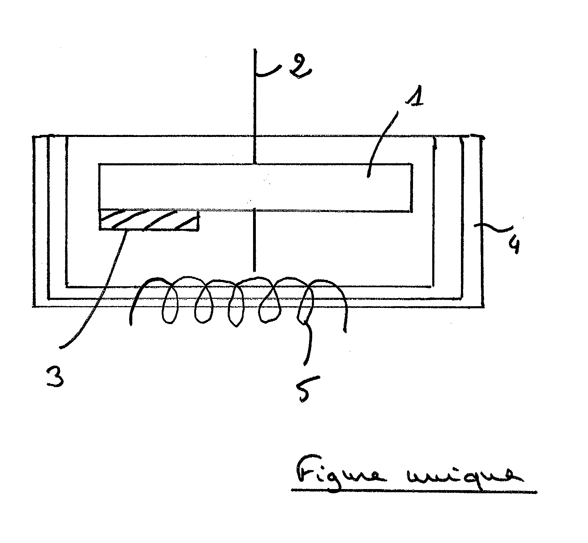

On décrira maintenant l'invention plus en détail en référence au dessin dans lequel la figure unique représente schématiquement un générateur selon l'invention.

Le générateur selon l'invention comporte un aimant permanent 1 sous la forme d'un barreau monté pivotant autour d'un axe 2 correspondant à son axe médian.

Cet aimant permanent 1 porte une masse 3 montée au voisinage d'une extrémité dudit aimant 1.

L'aimant permanent 1 est monté à l'intérieur d'un circuit magnétique 4 constituant le noyau d'une bobine 5. L'axe autour duquel pivote l'aimant est dans l'axe de la bobine 5.

Lorsque le générateur est monté dans un téléphone portable, l'utilisateur dudit téléphone se déplace. Sous l'effet des mouvements aléatoires liés au déplacement, la masse 3 déséquilibre l'aimant 1 qui pivote autour de l'axe 2. Le pivotement de l'aimant permanent 1 induit un courant dans la bobine 4.

Ce courant est utilisé pour charger la batterie du téléphone dans lequel le générateur est inséré. Ce courant, de nature alternative, est avantageusement redressé par un pont de diodes, par exemple, pour fournir à la batterie un courant de nature continue.

## Revendications

1. Générateur d'alimentation de la batterie d'un instrument portable tel qu'un téléphone portable, un baladeur ou similaires,
**caractérisé en ce qu'**il est constitué d'un aimant permanent (1) sous forme de barreau monté libre en rotation autour d'un axe de pivotement (2) correspondant à son axe médian, à l'intérieur d'un circuit magnétique (4) qui est le noyau d'une bobine (5), l'aimant permanent (1) portant une masse (3) au voisinage de l'une de ses extrémités, cet ensemble étant monté dans l'instrument de telle sorte que, lors de mouvements auxquels est soumis ledit instrument portable, l'aimant (1) déséquilibré par la masse (3), pivote autour de son axe (2) et par rapport au circuit magnétique (4), ce qui induit, dans la bobine (5), un courant utilisé pour charger la batterie de l'instrument.

2. Générateur selon la revendication 1,
**caractérisé en ce que** le circuit magnétique est constitué de deux demi-circuits reliés par le noyau d'une bobine, les deux demi-circuits étant alternativement nord et sud, la variation de flux induisant un courant alternatif.

3. Générateur selon la revendication 1,
**caractérisé en ce que** le générateur présente une structure similaire à celle d'un alternateur, le rotor étant constitué par l'aimant, le courant étant fourni par le stator.

4. Générateur selon l'une des revendications 1 à 3,
**caractérisé en ce que caractérisé en ce qu'**il comporte un redresseur, le courant induit dans la bobine, de nature alternative, étant ainsi redressé pour fournir à la batterie un courant de nature continue.

5. Générateur selon la revendication 4,
**caractérisé en ce que** le redresseur est constitué par un pont de diodes.

6. Générateur selon l'une des revendications 1 à 5,
**caractérisé en ce que** le générateur est inséré dans l'instrument de sorte que l'axe de pivotement (2) de l'aimant permanent (1) est parallèle à l'axe longitudinal de l'instrument.

7. Instrument portable tel que téléphone portable, baladeur ou similaires,
**caractérisé en ce qu'**il comporte un générateur d'alimentation selon l'une des revendications 1 à 6.
